# EUROPEAN PATENT APPLICATION

(11) **EP 0 889 336 A2**
(43) Date of publication of application: **07.01.1999**
(21) Application number: 98111937.3
(22) Date of filing: 27.06.1998
(51) Int. Cl.: G02B 6/16

(54) **Method of treating optical fiber to remove deformations**

(30) Priority: 30.06.1997 JP 173392/97; 30.06.1997 JP 173396/97
(71) Applicant: HOYA CORPORATION, Shinjuku-ku Tokyo (JP)
(72) Inventor: Itoh, Katsuhisa, Ome-shi, Tokyo 198-0062 (JP); Okada, Keiko, Akishima-shi, Tokyo 196-0022 (JP); Yanagita, Hiroaki, Hino-shi, Tokyo 191-0011 (JP)
(74) Representative: Cohausz & Florack

(57) **Abstract**

A stress in an optical fiber due to a deformation of the optical fiber is surely alleviated without damaging the optical fiber. For this purpose, the optical fiber coated with a coating material is treated with heat for a short time (about 0.1 seconds to 30 seconds) at a temperature higher than the glass transition temperature of the glass of which the optical fiber is composed. Otherwise, the optical fiber coated with the coating and bent into an arbitrary shape such as a circle is uniformly irradiated with a light having a photon energy near the edge of the absorption attending upon an electronic transition of the glass of which the optical fiber is composed.

## Description

### REFERENCE TO RELATED APPLICATION

This application claims the priority rights of Japanese Patent Application Nos. Hei 09-173396 filed on June 30, 1997 and Hei 09-173392 filed on June 30, 1997, the entire disclosure of which is incorporated herein by reference.

### BACKGROUND OF THE INVENTION

### (i) Field of the Invention

The present invention relates to a method of treating an optical fiber in which a stress in an optical fiber generated due to a deformation such as bend can be alleviated, and an optical fiber had been treated by the method of treating.

### (ii) Description of the Related Art

In recent years, the field of optical communication technique has rapidly been developed. The development is supported by many kinds of optical parts. Among them, there are many parts utilizing optical fibers. An optical fiber has excellent flexibility in addition to passive or active optical transmission and optical control functions. Therefore, in a general method of using an optical part utilizing an optical fiber, it is frequently performed to wind the optical fiber onto something or put the optical fiber in a case in the form of winding up freely.

Here, the reliability is in question. While the optical fiber is kept given a curvature, a tensile stress is always applied to a surface portion of the optical fiber. There is a possibility that the optical fiber breaks because of the growth of a scratch previously present in the surface portion or the formation of a surface crystallization due to corrosion.

For dissolving the above possibility of break, there is a method as disclosed in Japanese Patent Publication Toku-Ko-Hei 3-57447 for instance, in which the stress due to bend (deformation) of the optical fiber is alleviated. According to this method, the break can be avoided in principle even in the case of the wound optical fiber.

In the method disclosed in the Japanese Patent Publication Toku-Ko-Hei 3-57447, however, there are some features that are hard to realize in practice. The method of this official gazette proposes a heat treatment at not higher than the glass transition temperature of the glass of which the optical fiber is composed. But at a temperature not higher than the glass transition temperature, the heat treatment for a relatively long time is required for alleviating the stress in practice. The long-time heat treatment is equal with an accelerated test for the environmental resistivity in the state that a stress is applied to the optical fiber. There is a fear that the surface of the optical fiber deteriorates. If the fundamental strength of the optical fiber lowers due to the long-time heat treatment, an optical part using the optical fiber composed in this manner becomes very weak in vibration or the like.

It is advisable that this method for alleviating a bending stress in an optical fiber is applied to a relatively inferior optical fiber in environmental resistivity. The reasons are as follows. An optical fiber composed of a material having a high resistivity to environment can maintain the environmental resistivity to a degree not in question in practical use by raising its fundamental strength without alleviating a bending stress. In contrast to this, an optical fiber composed of a material originally having a low resistivity to environment includes a problem of crystallization due to corrosion in the fiber surface. Because it is very hard to suppress corrosion, there is a necessity for surely alleviating a bending stress. For such an optical fiber composed of a material having a low resistivity to environment, however, a heat treatment for a long time is disadvantageous for alleviating a bending stress. If the heat treatment is performed, crystallization occurs in the surface and grows enough to lower the mechanical strength fatally.

An optical fiber is generally coated with a resin for the purpose of protecting the fiber surface. Upon treating with heat, therefore, the optical fiber must be treated with heat together with the coating resin. The resin generally composed of organic high molecules has the nature of decomposing gradually. Therefore, when treating with heat for a relatively long time for alleviating a stress at a temperature not higher than the glass transition temperature, the decomposition gradually occurs even in the case of a resin having an enough heat resistance to the temperature (that is, not melting). There is a case that gases generated from the resin at that time include a kind that reacts with the surface of the optical fiber to promote crystallization. Particularly in the case of an optical fiber composed of a glass having a low resistivity to environment, the influence is enormous and the mechanical strength of the optical fiber remarkably lowers due to promoted crystallization.

### SUMMARY OF THE INVENTION

It is an object of the present invention to provide a method of treating an optical fiber in which a stress in an optical fiber due to a deformation of the optical fiber can surely be alleviated.

It is another object of the present invention to provide a method of treating an optical fiber in which a stress in an optical fiber due to a deformation of the optical fiber can surely be alleviated without damaging the optical fiber.

In a method of treating an optical fiber according to the first aspect of the present invention to alleviate a stress in an optical fiber due to a deformation of the optical fiber, giving an energy to the optical fiber to heat the optical fiber to a temperature at which the optical fiber can plastically be deformed and thereby the stress in the optical fiber is alleviated.

In a method of treating an optical fiber according to the second aspect of the present invention to alleviate a stress in an optical fiber coated with a coating material, due to a deformation of the optical fiber, giving an energy to the optical fiber to heat the optical fiber so that the glass of which the optical fiber is composed can plastically be deformed and the coating material is not damaged, and thereby the stress in the optical fiber is alleviated.

In a method of treating an optical fiber according to the third aspect of the present invention to alleviate a stress in an optical fiber coated with a coating material, due to a deformation of the optical fiber, treating the optical fiber with heat for a short time at a temperature higher than the glass transition temperature of the glass of which the optical fiber is composed, and thereby the stress in the optical fiber is alleviated. In this third aspect, it is desirable that the time for the heat treatment is from 0.1 seconds to 30 seconds.

In the above methods of treating an optical fiber according to the first to third aspects of the present invention, halide glass, oxyhalide glass, chalcogenide glass, oxychalcogenide glass, or tellurate glass, or lead-rich glass is suitable for the glass of which the optical fiber is composed.

According to the above methods of treating for optical fiber of the first to third aspects of the present invention, the stress in the optical fiber due to the deformation can surely be alleviated and removed so the reliability and life of the optical fiber can remarkably be improved. Besides, when the optical fiber is treated with heat for a short time at a temperature higher than the glass transition temperature, there is no problem of damaging the surface of the optical fiber, the coating material or the like. This remarkably and easily improves the reliability and life of the optical fiber composed of an inferior glass material in environmental resistivity such as fluoride glass, chalcogenide glass and chloride glass in particular. Furthermore, because of a short-time heat treatment, the productivity is high and it is easy to practice and it becomes satisfactorily practical also in cost performance to use even a material that has not been in practical use because of its too low resistivity to environment in spite of its very superior optical performances. These are very useful in the field of optical communication or the like.

In a method of treating an optical fiber according to the fourth aspect of the present invention to alleviate a stress in an optical fiber due to a deformation of the optical fiber, composing the optical fiber to absorb a light corresponding to a photon energy near the edge of the absorption attending upon an electronic transition of the glass of which the optical fiber is composed, so that alight-induced plastic deformation occurs in the optical fiber, and thereby the stress is alleviated.

In this method of treating an optical fiber according to the fourth aspect of the present invention, it is possible that the light corresponding to the photon energy near the edge of the absorption attending upon the electronic transition of the glass of which the optical fiber is composed into the optical fiber by the manner that the light is introduced through the outer circumferential surface of the optical fiber.

In this method of treating an optical fiber according to the fourth aspect of the present invention, it is also possible that a light-emitting source causing a frequency multiplication in which the multiplied light in frequency corresponds to the photon energy near the edge of the absorption attending upon the electronic transition of the glass of which the optical fiber is composed to the interior of the core or clad of the optical fiber, introducing a light to be multiplied in frequency into the optical fiber from an end surface in the longitudinal direction of the optical fiber or the outer circumferential surface of the optical fiber to multiply the light in frequency, thereby the light being absorbed to the optical fiber.

In the method of treating an optical fiber according to the fourth aspect of the present invention, the optical fiber may be coated with a coating by which at least 10% of the light corresponding to the photon energy near the edge of the absorption attending upon the electronic transition of the glass of which the optical fiber is composed is transmitted.

In the method of treating an optical fiber according to the fourth aspect of the present invention, any of halide glass, oxyhalide glass, chalcogenide glass, oxychalcogenide glass, tellurate glass, phosphate glass and borate glass is suitable for the glass of which the optical fiber is composed.

According to the above method of treating an optical fiber of the fourth aspect of the present invention, the optical fiber can be treated to alleviate the stress with hardly raising the temperature because of utilizing the phenomenon of a light-induced plastic deformation. When the surface of the optical fiber is coated, there is no problem of damaging the coating material. As a result, the reliability and life of the optical fiber can remarkably be improved. This is suitable particularly for the optical fiber composed of an inferior glass material in environmental resistivity such as fluoride glass, chalcogenide glass, chloride glass, phosphate glass, tellurate glass and borate glass. Furthermore, because the optical fiber is only irradiated with a light, it is effective and simple to practice and it becomes satisfactorily practical also in cost performance to use even a material that has not been in practical use because of its too low resistivity to environment in spite of its very superior optical performances. This is very useful in the field of optical communication or the like.

An optical fiber according to the present invention had been treated by any of the above method of treating s for optical fiber to alleviate the stress due to the deformation of the optical fiber.

### DESCRIPTION OF THE PREFERRED EMBODIMENTS

Hereinafter, embodiments of a method of treating an optical fiber according to the present invention will be described.

In a method of treating an optical fiber according to the first embodiment, an energy is given to an optical fiber to heat the optical fiber to a temperature at which the optical fiber can plastically be deformed and thereby the plasticity or fluidity in the optical fiber is promoted to alleviate a stress generated in the optical fiber. For giving the energy to the optical fiber, thermal conduction from a substance at a higher temperature than that of the optical fiber, thermal radiation by infrared rays or the like, or a high-frequency heating such as a dielectric heating is usable.

In a method of treating an optical fiber according to the second embodiment, an energy is given to an optical fiber coated with a coating material to heat the optical fiber so that the glass of which the optical fiber is composed can plastically be deformed and the coating material is not damaged. The glass of which the optical fiber is composed must be heated to the extent that a plastic deformation or a fluidization of it becomes possible but the coating material such as resin must not be damaged in the heating process. For this purpose, the following measures are usable. The optical fiber portion composed of the core and clad is mainly heated by, for instance, regulating the time for heating into a short time or introducing infrared rays through an end surface of the optical fiber to transmit them in the fiber. Otherwise, by using a dielectric heating with the natural frequency resonating not the coating material but the glass of which the optical fiber is composed, the glass is selectively heated.

In a method of treating an optical fiber according to the third embodiment, an optical fiber coated with a coating material is treated with heat for a short time (about 0.1 seconds to 30 seconds) at a temperature higher than the glass transition temperature of the glass of which the optical fiber is composed.

The glass is in the viscoelastic phase at a higher temperature than the glass transition temperature and the flowage of atoms of the glass becomes active. Because the optical fiber itself is fine (the diameter of 125 µm in general), a very little flowage is enough in the extent of aiming the stress alleviation. Thus by heating for a very short time as described above, the stress alleviation in the part to which a bending stress is applied can easily be performed. On the other hand, the resin of organic high molecules generally used for coating can keep its shape and nature without much decomposing even at a temperature much higher than the so-called heat resistance temperature if heating is for a very short time. For instance, in the case of polyacrylate resin which is an ultraviolet curing resin generally used for coating optical fibers, the heat resistance temperature is considered about 150°C but it has no problem even at a temperature not less than 260°C if the time for heating is within 20 seconds.

The heat-resisting properties of resins are widely different according to the kinds of the resins. For instance, as for polyimide or the like, there are data showing it is not less than 500°C. But, it is hard to apply such a resin having a high thermal resistance to an optical fiber composed of a halide glass or a chalcogenide glass the glass transition temperature of which is low in general. The reason is as follows. Because the melting point of the resin having the high thermal resistance is high in general, the resin in a molten state can not be applied to the optical fiber. For instance, the processing temperature of thermoplastic polyimide is considered about 450°C. On the other hand, if the nature of the coating resin is improved so that it is easy to apply, its thermal resistance is sacrificed.

Besides, the resin coating of the optical fiber is not merely for the protection against scratching but for preventing microbend or the like. Because a precise design for the Young's modulus is required for that purpose, the coating merely having a good thermal resistance is insufficient for making the optical fiber fulfill its perfect function. In addition, the productivity in manufacturing optical fibers is also an important factor to be taken into consideration. For instance, in the case of a resin such as silicone resin that has a high thermal resistance but is fundamentally thermosetting, it takes a long time to manufacture and the productivity is bad. For a use chiefly requiring a high thermal resistance, it is necessary to apply a resin having the high thermal resistance even if the other factors are deteriorated. But for a general optical part used at the normal temperature, a coating never spoiling the function of the optical part is required.

In the above embodiment, even if the temperature for the heat treatment higher than the glass transition temperature is higher than the so-called heat resistance temperature of the coating resin by about 100°C, only the stress applied to the glass can be alleviated without considerably deteriorating the nature of the resin because the heating time is short. Accordingly, a resin that deteriorates the optical performances of the optical fiber as little as possible can suitably be selected from among a many kinds of resins that can stand heating for 30 seconds at the most. The time for the heat treatment is desirably not less than 0.1 seconds. If the time is less than 0.1 seconds, it is hard in practice to adjust the time and temperature to heat the optical fiber to a predetermined temperature.

Furthermore, the time for the heat treatment can be shortened in the case of the heat treatment at higher than the glass transition temperature. Thus even in the case of a glass composed of a material having a relatively low resistivity to environment, no crystallization occurs in the surface or even if crystallization occurs, it grows only to the extent of hardly lowering the mechanical strength. Moreover, because the time for the heat treatment is short, the productivity is very high. This is practical. The longer is the time for the heat treatment, the higher is the possibility that an accident of the optical fiber breaking occurs in the heat treatment and the more is required the energy for heating.

Besides, because the glass is practically deformed at higher than the glass transition temperature in general, the bending stress in the optical fiber can surely be alleviated to almost zero in the above embodiment. In contrast with this, a heat treatment at not higher than the glass transition temperature alleviates only a part of the stress. It is difficult to control the residual stress and the stress is apt to be uneven.

For an example of the above embodiment, the following heat treatment was performed. The glass of which the clad was composed was a fluoride glass including zirconium fluoride as the main component (ZBLAN: the glass transition temperature of 250°C; the clad diameter of 125 µm). The optical fiber in which the above clad was coated with a polyacrylate resin was wound into a circle of 50 mm diameter and then heated for 5 seconds on a hot plate heated to the surface temperature of 265°C and then rapidly cooled in the air with maintaining the shape. There was no change in the survey of the optical fiber before and after the heat treatment and it was considered that no decomposition of the coating occurred. Even when the whole of the optical fiber treated with heat as the above manner was dipped in dichloromethane to swell and remove the coating, the optical fiber kept the wound form of 50 mm diameter. There was also no change in the transmission loss in the optical fiber before and after the heat treatment. When the surface of the optical fiber composed as the above manner was observed with an optical microscope, there was observed no separation of new crystallization before and after the heat treatment and also observed no growth of the crystallization present originally. After the above heat treatment, when the optical fiber wound into 50 mm⌀ and the coating of which had been removed was kept as it is in a thermo-hygrostat at the temperature of 80°C and the relative humidity of 85% for 150 hours, no break occurred. In contrast with this, when a ZBLAN fiber having the same construction and composition and the coating of which had been removed without the heat treatment was wound into 50 mm⌀ and then put in the thermo-hygrostat at the temperature of 80°C and the relative humidity of 85%, it broke in about 3 hours. The effect of the stress alleviation according to the above embodiment is therefore obvious. On the other hand, if the fundamental mechanical strength considerably deteriorates by the heat treatment, it is supposed that the optical fiber can not endure the removal of the coating after the heat treatment (because the optical fiber must once be extended straight upon the removal). But, as shown in this example, it was confirmed that no question arose if the time for the heat treatment was short.

Next, concrete examples of the method of treating s for optical fiber according to the above first to third embodiments will be described.

### (Example 1)

A treatment for alleviating a stress was performed to an optical fiber for optical amplifier for 1.3 µm wavelength, in which the clad composition was ZrF₄: 53%, BaF₂: 20%, LaF₃: 4%, AlF₃: 3%, and NaF: 20% (mol%) (the glass transition temperature of 250°C), the clad diameter was 125 µm⌀, the core contained 1000 ppm of Pr³⁺, and the outer circumferential surface of the clad was coated with an ultraviolet curing resin of polyacrylate (the coating diameter of 250 µm). 8 m of this optical fiber was wound into a circle of 50 mm diameter and then heated for 5 seconds on a hot plate heated to the surface temperature of 265°C and then rapidly cooled in the air with maintaining the shape. There was no change in the survey of the optical fiber before and after the heat treatment and it was considered that no decomposition of the coating occurred. Even when the whole of the optical fiber treated with heat as the above manner was dipped in dichloromethane to swell and remove the coating, the optical fiber kept the wound form of 50 mm diameter. There was also no change in the transmission loss in the optical fiber before and after the heat treatment. When the surface of the optical fiber composed as the above manner was observed with an optical microscope, there was observed no separation of new crystallization before and after the heat treatment and also observed no growth of the crystallization present originally. After the above heat treatment, when the optical fiber wound into 50 mm⌀ and the coating of which had been removed was kept as it is in a thermo-hygrostat at the temperature of 80°C and the relative humidity of 85% for 150 hours, no break occurred.

On the other hand, for comparison with this example, when the same optical fiber the coating of which had been removed without the heat treatment was wound into 50 mm⌀ and then put in the thermo-hygrostat at the temperature of 80°C and the relative humidity of 85%, it broke in about 3 hours.

### (Example 2)

8 m of the optical fiber for optical amplifier for 1.3 µm wavelength, which had the same composition and construction as the example 1, was wound into a circle of 50 mm diameter and then dipped for 10 seconds in an oil bath filled with a silicone oil heated to the temperature of 255°C, and then cooled in the silicone oil at the room temperature with maintaining the shape. There was no change in the survey of the optical fiber before and after the heat treatment and no decomposition of the coating occurred. Even when the whole of the optical fiber treated with heat as the above manner was dipped in dichloromethane to swell and remove the coating, the optical fiber kept the wound form of 50 mm diameter. There was also no change in the transmission loss in the optical fiber before and after the heat treatment. When the surface of the optical fiber composed as the above manner was observed with an optical microscope, there was observed no separation of new crystallization before and after the heat treatment and also observed no growth of the crystallization present originally. Besides, when the shape of a cross section of the optical fiber after the heat treatment was observed with the optical microscope, the shape did not change at all from that before the heat treatment.

### (Example 3)

8 m of the optical fiber for optical amplifier for 1.3 µm wavelength, which had the same composition and construction as the example 1, was wound into a single spiral of 20 mm inside diameter and 50 mm outside diameter and then heated for 5 seconds on a hot plate heated to the surface temperature of 265°C and then rapidly cooled in the air with maintaining the shape. There was no change in the survey of the optical fiber before and after the heat treatment and it was considered that no decomposition of the coating occurred. Even when the whole of the optical fiber treated with heat as the above manner was dipped in dichloromethane to swell and remove the coating, the optical fiber kept the original wound form. There was also no change in the transmission loss in the optical fiber before and after the heat treatment. When the surface of the optical fiber composed as the above manner was observed with an optical microscope, there was observed no separation of new crystallization before and after the heat treatment and also observed no growth of the crystallization present originally.

### (Example 4)

This example used an optical fiber for optical amplifier for 1.3 µm wavelength, in which the clad composition was ZrF₄: 53%, BaF₂: 20%, LaF₃: 4%, AlF₃: 3%, and NaF: 20% (mol%) (the glass transition temperature of 250°C), the clad diameter was 125 µm⌀, the core contained 1000 ppm of Pr³⁺, and the outer circumferential surface of the clad was coated with an ultraviolet curing resin of polyacrylate for buffer (the coating diameter of 200 µm) and an ultraviolet curing resin of polyacrylate for hard coat (the coating diameter of 400 µm). 8 m of this optical fiber was wound into a cylinder of 15 mm diameter and then dipped for 20 seconds in an oil bath filled with a silicone oil heated to the temperature of 255°C, and then cooled in the silicone oil at the room temperature with maintaining the shape. There was no change in the survey of the optical fiber before and after the heat treatment and it was considered that no decomposition of the coatings occurred. There was also no change in the transmission loss in the optical fiber before and after the heat treatment. When the transmission loss in this wound optical fiber was measured in the condition of being kept at -40°C, the loss did not increase and it was thus concluded that no microbend occurred. Even when the whole of the optical fiber treated with heat as the above manner was dipped in dichloromethane to swell and remove the coatings, the optical fiber kept the wound form of 15 mm diameter. After the above heat treatment, when the optical fiber wound into 15 mm⌀ and the coatings of which had been removed was kept as it is in a thermo-hygrostat at the temperature of 80°C and the relative humidity of 85% for 150 hours, no break occurred.

For comparison with this example, when the same optical fiber the coatings of which had been removed without the heat treatment was wound into 15 mm⌀ and then put in the thermo-hygrostat at the temperature of 80°C and the relative humidity of 85%, it broke in about 30 minutes.

### (Example 5)

This example used a single-mode optical fiber for optical switch, in which the clad composition was As: 40% and S: 60% (mol%) (the glass transition temperature of 170°C), the clad diameter was 125 µm⌀, and the outer circumferential surface of the clad was coated with an ultraviolet curing resin of polyacrylate (the coating diameter of 250 µm). 3 m of this optical fiber was wound into a cylinder of 10 mm diameter and then dipped for 10 seconds in an oil bath filled with a silicone oil heated to the temperature of 190°C, and then cooled in the silicone oil at the room temperature with maintaining the shape. There was no change in the survey of the optical fiber before and after the heat treatment and no decomposition of the coating occurred. Even when the whole of the optical fiber treated with heat as the above manner was dipped in dichloromethane to swell and remove the coatings, the optical fiber kept the wound form of 10 mm diameter. There was also no change in the transmission loss in the optical fiber before and after the heat treatment. When the surface of the optical fiber composed as the above manner was observed with an optical microscope, there was observed no separation of new crystallization before and after the heat treatment and also observed no growth of the crystallization present originally. Besides, when the shape of a cross section of the optical fiber after the heat treatment was observed with the optical microscope, the shape did not change at all from that before the heat treatment. After the above heat treatment, when the optical fiber wound into 10 mm⌀ and the coating of which had been removed was kept as it is in a thermo-hygrostat at the temperature of 80°C and the relative humidity of 85% for 150 hours, no break occurred.

On the other hand, for comparison with this example, when the same optical fiber the coating of which had been removed without the heat treatment was wound into 10 mm⌀ and then put in the thermo-hygrostat at the temperature of 80°C and the relative humidity of 85%, it broke in about 2 hours.

### (Example 6)

This example used an optical fiber in which the clad composition was Ga₂S₃: 65% and Na₂S: 35% (mol%) (the glass transition temperature of 485°C), the clad diameter was 125 µm⌀, 1000 ppm of Pr³⁺ were doped into the core, and the outer circumferential surface of the clad was coated with an polyimide coating (the coating diameter of 150 µm; the heat resistance temperature of 390°C). 3 m of this optical fiber was wound into a circle of 40 mm diameter and then put into a small electric furnace disposed in a nitrogen atmosphere of the dew point of -76°C and heated to the temperature of 500°C, and then cooled in the nitrogen atmosphere with maintaining the shape. There was no change in the survey of the optical fiber before and after the heat treatment and no decomposition of the coating occurred. There was also no change in the transmission loss in the optical fiber before and after the heat treatment. When the surface of the optical fiber composed as the above manner was observed with an optical microscope, there was observed no separation of new crystallization before and after the heat treatment and also observed no growth of the crystallization present originally. Besides, when the shape of a cross section of the optical fiber after the heat treatment was observed with the optical microscope, the shape did not change at all from that before the heat treatment. After the above heat treatment, when the optical fiber wound into 40 mm⌀ and the coating of which had been removed was kept as it is in a thermo-hygrostat at the temperature of 80°C and the relative humidity of 85% for 150 hours, no break occurred.

For comparison with this example, when the same optical fiber the coating of which had been removed without the heat treatment was wound into 40 mm⌀ and then put in the thermo-hygrostat at the temperature of 80°C and the relative humidity of 85%, it broke in about 10 minutes.

### (Example 7)

This example used an optical fiber for optical amplifier for 1.55 µm wavelength band, in which the clad composition was AlF₃: 30.2%, ZrF₄: 10.1%, YF₃: 6.3%, SrF₂: 13.2%, MgF₂: 3.6%, NaF: 3.7%, and NaCl: 5.1% by mol% (the glass transition temperature of 366°C), the clad diameter was 125 µm⌀, the core contained 3000 ppm of Er³⁺, and the outer circumferential surface of the clad was coated with an ultraviolet curing resin of polyacrylate (the coating diameter of 250 µm). 3 m of this optical fiber was wound into a circle of 20 mm diameter and then heated for 5 seconds on a hot plate heated to the surface temperature of 380°C and then rapidly cooled in the air with maintaining the shape. There was no change in the survey of the optical fiber before and after the heat treatment and it was considered that no decomposition of the coating occurred. Even when the whole of the optical fiber treated with heat as the above manner was dipped in dichloromethane to swell and remove the coating, the optical fiber kept the wound form of 20 mm diameter. There was also no change in the transmission loss in the optical fiber before and after the heat treatment. When the surface of the optical fiber composed as the above manner was observed with an optical microscope, there was observed no separation of new crystallization before and after the heat treatment and also observed no growth of the crystallization present originally. After the above heat treatment, when the optical fiber wound into 20 mm⌀ and the coating of which had been removed was kept as it is in a thermo-hygrostat at the temperature of 80°C and the relative humidity of 85% for 150 hours, no break occurred. On the other hand, when a ZBLAN fiber the coating of which had been removed without the heat treatment was wound into 20 mm⌀ and then put in the thermo-hygrostat at the temperature of 80°C and the relative humidity of 85%, it broke in about 5 hours.

### (Example 8)

This example used an optical fiber for optical amplifier for 1.3 µm wavelength band, in which the clad composition was ZrF₄: 53%, BaF₂: 20%, LaF₃: 4%, AlF₃: 3%, and NaF: 20% by mol% (the glass transition temperature of 250°C), the clad diameter was 125 µm⌀, the core contained 1000 ppm of Pr³⁺, and the outer circumferential surface of the clad was coated with an ultraviolet curing resin of polyacrylate (the coating diameter of 250 µm). 8 m of this optical fiber was wound onto the outer circumference of a cylinder of 40 mm diameter and then heated for 5 seconds in a glove box by dipping in a silicone oil heated to the temperature of 270°C, and immediately, cooled rapidly in the air with maintaining the shape in the silicone oil at the room temperature. There was no change in the survey of the optical fiber before and after the heat treatment and it was considered that no decomposition of the coating occurred. Even when the whole of the optical fiber treated with heat as the above manner was dipped in dichloromethane to swell and remove the coating, the optical fiber kept the circular form of 40 mm diameter. There was also no change in the transmission loss in the optical fiber before and after the heat treatment. When the surface of the optical fiber composed as the above manner was observed with an optical microscope, there was observed no separation of new crystallization before and after the heat treatment and also observed no growth of the crystallization present originally. After the above heat treatment, when the optical fiber wound into 40 mm⌀ and the coating of which had been removed was kept as it is in a thermo-hygrostat at the temperature of 80°C and the relative humidity of 85% for 150 hours, no break occurred. On the other hand, when a ZBLAN fiber the coating of which had been removed without the heat treatment was wound into 40 mm⌀ and then put in the thermo-hygrostat at the temperature of 80°C and the relative humidity of 85%, it broke in about 3 hours.

Other than the above examples, for optical fibers are practicable oxide glass fibers of silica-lead having the glass transition temperatures of 350-550°C, chloride glass fibers having the glass transition temperature of 180°C, fluorophosphate glass fibers of various compositions having the glass transition temperatures of 100-500°C, phosphate glass fibers of various compositions having the glass transition temperatures of 150-500°C, borate glass fibers having the glass transition temperatures of 400-500°C, borosilicate glass fibers having the glass transition temperatures of 400-500°C, and so on. For coatings are usable polyimide and polyamide imide when the treatment temperature may reach 800°C, polyfluoroalkyl(PFA), polytetrafluoroethylene(PTFE), polytetrafluoroethylene-hexafluoropropylene copolymer(FEP) and silicone polyamide when the treatment temperature may reach 500°C, and polyacrylate, polyurethaneacrylate, polyfluoroacrylate, high density polyethylene and ethylene-tetrafluoroethylene copolymer when the treatment temperature is to the extent of 400°C.

Next, a method of treating an optical fiber according to the fourth embodiment of the present invention will be described.

In the fourth embodiment, an optical fiber coated with a coating and bent into an arbitrary shape such as a circle is uniformly irradiated with a light having an energy near the edge of the absorption (base absorption) attending upon an electronic transition of the glass of which the optical fiber is composed and thereby a light(energy particle)-induced plastic deformation is composed to occur in the optical fiber to alleviate a stress.

Such a light-induced plastic deformation is remarkable especially in non-oxide glass, for instance, chalcogenide glass. It is known that a non-thermal plastic deformation occurs due to a stress even at the room temperature when a glass is irradiated with photons corresponding to an energy near the edge of the absorption attending upon an electronic transition of the glass (Keiji Tanaka, "APPLIED PHYSICS", volume 66, No. 3 (1997)). For instance, the following phenomenon is reported. When a chalcogenide glass fiber of arsenic-sulfur keeps on being irradiated with an He-Ne laser light of the wavelength of 633 nm at the room temperature in the condition of applying a load, the portion of the fiber irradiated with the light is stretched and comes to break at last. This phenomenon is called light-induced (plastic) deformation and explained that atomic structures in the glass change by being irradiated with the light and with this, macroscopic movements of component atoms occur. A peculiarity of the light-induced (plastic) deformation is that the viscosity of the glass can be lowered to the viscoelastic phase with hardly raising the temperature (the temperature rise is less than 0.1°C). Accordingly, it is possible to alleviate a stress (for instance, a bending stress) due to a deformation of the glass itself in the state that the optical fiber keeps being coated with a coating, and without depending on the heat-resisting property of the coating at all.

But, because the light near the absorption edge must reach the glass portion of the optical fiber, the coating on the outer circumference of the optical fiber needs to transmit at least 10% of the above light. In that case, although a resin originally having a high transmissivity to the wavelength of the light may be selected, the purpose can also be attained by decreasing the thickness of the coating even in the case of a low transmissivity.

If not irradiated with such a light, in any optical fiber, the deforming stress can not naturally be alleviated for a practically finite time at the room temperature. Besides, it is known that the lower the temperature is, the more the phenomenon of the light-induced (plastic) deformation is remarkable. Also from this point of view, the thermal effect is denied in the stress alleviation process by the light-induced deformation.

The resin coating of the optical fiber is not merely for the protection against scratching but, for instance, for preventing microbend or the like. A precise design for the Young's modulus is required for that purpose. It is difficult to select and make a resin having such a characteristic and superior in the thermal resistance. In contrast with this, in the phenomenon of the light-induced deformation used in the fourth embodiment of the present invention, the coating never deteriorates because the temperature hardly rises. Therefore, most resin coatings currently utilized are usable. Besides, because the stress alleviation can be performed at the room temperature, the mechanical strength of the optical fiber never deteriorates in the stress alleviation process.

For a concrete example of the stress alleviation treatment, the following treatment was performed. The glass of which the clad was composed was a chalcogenide glass of arsenic-sulfur (the clad diameter of 125 µm; the wavelength at the absorption edge of 550 nm; polyacrylate resin coating). The optical fiber including the above clad was wound into a circle of 50 mm diameter and then thoroughly irradiated with an He-Ne laser light of the wavelength of 633 nm at the room temperature for 3 hours to alleviate the stress due to the bend. There was no change in the survey of the optical fiber before and after the alleviation treatment. Besides, even when the whole of the optical fiber treated for the stress alleviation as the above manner was dipped in dichloromethane to swell and remove the coating, the optical fiber kept the wound form of 50 mm diameter. There was also no change in the transmission loss in the optical fiber before and after the alleviation treatment. When the surface of the optical fiber composed as the above manner was observed with an optical microscope, there was observed no separation of new crystallization before and after the alleviation treatment and also observed no growth of the crystallization present originally. After the above alleviation treatment, when the optical fiber wound into 50 mm⌀ and the coating of which had been removed was kept as it is in a thermo-hygrostat at the temperature of 80°C and the relative humidity of 85% for 150 hours, no break occurred. In contrast with this, when the same glass fiber of arsenic-sulfur the coating of which had been removed without the alleviation treatment was wound into 50 mm⌀ and then put in the thermo-hygrostat at the temperature of 80°C and the relative humidity of 85%, it broke in about 10 hours. From the above, the effect of the stress alleviation treatment according to the fourth embodiment of the present invention is obvious. Next, concrete examples of the method of treating an optical fiber according to the fourth embodiment of the present invention will be described.

### (Example 1)

A stress alleviation treatment was performed to a single-mode optical fiber for optical switch, in which the clad composition was As: 40% and S: 60% (mol%) (the glass transition temperature of 170°C), the clad diameter was 125 µm⌀, and the outer circumferential surface of the clad was coated with an ultraviolet curing resin of polyacrylate (the coating diameter of 250 µm). 3 m of this single mode optical fiber was wound into a cylinder of 10 mm diameter and then thoroughly irradiated with an He-Ne laser light of the wavelength of 633 nm at the room temperature for 3 hours to alleviate the stress due to the bend. There was no change in the survey of the optical fiber before and after the alleviation treatment. Besides, even when the whole of the optical fiber treated for the stress alleviation as the above manner was dipped in dichloromethane to swell and remove the coating, the optical fiber kept the wound form of 10 mm diameter. There was also no change in the transmission loss in the optical fiber before and after the alleviation treatment. When the surface of the optical fiber composed as the above manner was observed with an optical microscope, there was observed no separation of new crystallization before and after the alleviation treatment and also observed no growth of the crystallization present originally. Besides, when the shape of a cross section of the optical fiber after the alleviation treatment was observed with the optical microscope, the shape did not change at all from that before the alleviation treatment. After the above alleviation treatment, when the optical fiber wound into 10 mm⌀ and the coating of which had been removed was kept as it is in a thermo-hygrostat at the temperature of 80°C and the relative humidity of 85% for 150 hours, no break occurred.

On the other hand, for comparison with this example, when the same optical fiber the coating of which had been removed without the alleviation treatment was wound into 10 mm⌀ and then put in the thermo-hygrostat at the temperature of 80°C and the relative humidity of 85%, it broke in about 2 hours.

### (Example 2)

This example used an optical fiber in which the clad composition was Ga₂S₃: 65% and Na₂S: 35% by mol% (the glass transition temperature of 485°C; the ultraviolet absorption edge of 450 nm), the clad diameter was 125 µm⌀, the core contained 1000 ppm of Pr³⁺, and the outer circumferential surface of the clad was coated with a polyfluoroacrylate coating (the coating diameter of 250 µm). 3 m of this optical fiber was wound into a circle of 40 mm diameter and then uniformly irradiated with an Ar⁺ ion laser light of the wavelength of 488 nm for 5 hours. There was no change in the survey of the optical fiber before and after the alleviation treatment. There was also no change in the transmission loss in the optical fiber before and after the alleviation treatment. Besides, when the shape of a cross section of the optical fiber after the alleviation treatment was observed with an optical microscope, the shape did not change at all from that before the alleviation treatment. After the above alleviation treatment, when the optical fiber wound into 40 mm⌀ and the coating of which had been removed was kept as it is in a thermo-hygrostat at the temperature of 80°C and the relative humidity of 85% for 150 hours, no break occurred.

For comparison with this example, when the same optical fiber of Ga-Na-S the coating of which had been removed without the alleviation treatment was wound into 40 mm⌀ and then put in the thermo-hygrostat at the temperature of 80°C and the relative humidity of 85%, it broke in about 10 minutes.

Another optical fiber was composed by the same alleviation treatment as the above. Quartz fibers were connected to both end surfaces of the optical fiber (kept with the coating) and then they were put in a case to make an optical fiber amplifying module. When the light amplifying property in 1.31 µm wavelength of the module was measured, it was in no way inferior to the light amplifying property of an optical fiber amplifying module composed by using an optical fiber without the alleviation treatment.

### (Example 3)

A stress alleviation treatment was performed to an optical fiber for optical amplifier for 1.3 µm wavelength, in which the clad composition was ZrF₄: 53%, BaF₂: 20%, LaF₃: 4%, AlF₃: 3%, and NaF: 20% (mol%) (the glass transition temperature of 250°C), the clad diameter was 125 µm⌀, the core contained 1000 ppm of Pr³⁺, and the outer circumferential surface of the clad was coated with a resin coating of polytetrafluoroethylene-hexafluoropropylene copolymer (the coating diameter of 250 µm). That is, 8 m of this optical fiber was wound into a cylinder of 50 mm diameter and then uniformly irradiated with a KrF excimer laser light of the wavelength of 250 nm for 30 minutes. There was no change in the survey of the optical fiber before and after the alleviation treatment and it was considered that no decomposition of the coating occurred. Besides, even when the whole of the optical fiber treated for the stress alleviation as the above manner was dipped in dichloromethane to swell and remove the coating, the optical fiber kept the wound form of 50 mm diameter. There was also no change in the transmission loss in the optical fiber before and after the alleviation treatment. After the above alleviation treatment, when the optical fiber wound into 50 mm⌀ and the coating of which had been removed was kept as it is in a thermo-hygrostat at the temperature of 80°C and the relative humidity of 85% for 150 hours, no break occurred.

On the other hand, for comparison with this example, when the same ZBLAN optical fiber the coating of which had been removed without the alleviation treatment was wound into 50 mm⌀ and then put in the thermo-hygrostat at the temperature of 80°C and the relative humidity of 85%, it broke in about 10 hours.

Another optical fiber was composed by the same alleviation treatment as the above. Quartz fibers were connected to both end surfaces of the optical fiber (kept with the coating) and then they were put in a case to make an optical fiber amplifying module. When the light amplifying property in 1.31 µm wavelength of the module was measured, it was in no way inferior to the light amplifying property of an optical fiber amplifying module composed by using an optical fiber without the alleviation treatment.

### (Example 4)

This example used an optical fiber (for amplifying fiber for 1.55 µm wavelength band or visible laser fiber) in which the clad composition was Ga₂S₃: 65% and Na₂S: 35% by mol% (the glass transition temperature of 485°C; the ultraviolet absorption edge of 450 nm), the core composition was Ga₂S₃: 67% and Na₂S: 33% by mol%, the core diameter is 4 µm, the number of aperture is 0.2, the clad diameter was 125 µm⌀, 1000 ppm of Er³⁺ were doped into the core, and the outer circumferential surface of the clad was coated with a polyfluoroacrylate coating (the coating diameter of 250 µm). 3 m of this optical fiber was wound into a circle of 40 mm diameter and then a semiconductor laser light (exciting light) of the wavelength of 780 nm was introduced into the optical fiber from an end surface in the longitudinal direction of the optical fiber. The exciting light was almost evenly transmitted in the optical fiber and excited Er³⁺ ions to be multiplied in frequency so that a fluorescent light of the wavelength of 410 nm was emitted also from the side surface. After 4 hours from introducing the exciting light, it was confirmed that an alleviation of the bending strength brought about by the fluorescent light of the wavelength of 410 nm occurred in the optical fiber. There was no change in the survey of the optical fiber before and after the alleviation treatment. There was also no change in the transmission loss in the optical fiber before and after the alleviation treatment. Besides, when the shape of a cross section of the optical fiber after the alleviation treatment was observed with an optical microscope, the shape did not change at all from that before the alleviation treatment. After the above alleviation treatment, when the optical fiber wound into 40 mm⌀ and the coating of which had been removed was kept as it is in a thermo-hygrostat at the temperature of 80°C and the relative humidity of 85% for 150 hours, no break occurred.

For comparison with this example, when the same optical fiber of Ga-Na-S the coating of which had been removed without the alleviation treatment was wound into 40 mm⌀ and then put in the thermo-hygrostat at the temperature of 80°C and the relative humidity of 85%, it broke in about 10 minutes.

Other than the above examples, the present invention is also applicable by selecting laser or other intensive lights of proper wavelengths near the absorption edges to chalcogenide glass or oxychalcogenide glass of Ga-La-S (the absorption edge; 480 nm), Ga-Ge-S (the absorption edge; 470 nm), Ge-As-S (the absorption edge; 460 nm), B-Na-S (the absorption edge; 430 nm), As-Sb-S-Se (the absorption edge; 600 nm) or the like, tellurate glass (the absorption edge; 350 nm), chloride glass (the absorption edge; 300 nm), iodide glass (the absorption edge; 550 nm), phosphate glass (the absorption edge; 310 nm), fluorophosphate glass (the absorption edge; 200 nm), borate glass (the absorption edge; 250 nm), and so on.

## Claims

1. A method of treating an optical fiber to alleviate a stress in an optical fiber due to a deformation of the optical fiber, said method comprising giving an energy to the optical fiber to heat the optical fiber to a temperature at which the optical fiber can plastically be deformed and thereby the stress in the optical fiber is alleviated.

2. A method of treating an optical fiber to alleviate a stress in an optical fiber coated with a coating material, due to a deformation of the optical fiber, said method comprising giving an energy to the optical fiber to heat the optical fiber so that the glass of which the optical fiber is composed can plastically be deformed and the coating material is not damaged, and thereby the stress in the optical fiber is alleviated.

3. A method of treating an optical fiber to alleviate a stress in an optical fiber coated with a coating material, due to a deformation of the optical fiber, said method comprising heat treating the optical fiber for a short time at a temperature higher than the glass transition temperature of the glass of which the optical fiber is composed, and thereby the stress in the optical fiber is alleviated.

4. A method of treating an optical fiber of claim 3, characterized in that the time for the heat treatment is from 0.1 seconds to 30 seconds.

5. A method in accordance with any of claims 1 to 3, characterized in that the glass of which said optical fiber is composed is one selected from a group of halide glass, oxyhalide glass, chalcogenide glass, oxychalcogenide glass and tellurate glass.

6. A method in accordance with any of claims 1 to 3, characterized in that the glass of which said optical fiber is composed is a lead-rich glass.

7. A method of treating an optical fiber to alleviate a stress in an optical fiber due to a deformation of the optical fiber, said method comprising making optical fiber to absorb a light corresponding to a photon energy near the edge of the absorption attending upon an electronic transition of the glass of which said optical fiber is composed, so that a light-induced plastic deformation occurs in said optical fiber, and thereby the stress is alleviated.

8. A method in accordance with claim 7, said method comprising introducing the light corresponding to the photon energy near the edge of the absorption attending upon the electronic transition of the glass of which said optical fiber is composed into said optical fiber from the outer circumferential surface of said optical fiber, and thereby said light is absorbed to said optical fiber.

9. A method in accordance with claim 7, said method comprising adding a light-emitting source causing a frequency multiplication in which the multiplied light in frequency corresponds to the photon energy near the edge of the absorption attending upon the electronic transition of the glass of which said optical fiber is composed to the interior of the core or clad of said optical fiber,
introducing a light to be multiplied in frequency into said optical fiber from an end surface in the longitudinal direction of said optical fiber or the outer circumferential surface of said optical fiber to multiply the light in frequency, and thereby said light is absorbed to said optical fiber.

10. A method in accordance with claim 7, characterized in that said optical fiber is coated with a coating by which at least 10% of the light corresponding to the photon energy near the edge of the absorption attending upon the electronic transition of the glass of which said optical fiber is composed is transmitted.

11. A method in accordance with claim 7, characterized in that the glass of which said optical fiber is composed is one selected from a group of halide glass, oxyhalide glass, chalcogenide glass, oxychalcogenide glass, tellurate glass, phosphate glass and borate glass.

12. An optical fiber wherein a stress due to a deformation of the optical fiber is alleviated by the method of any claims 1, 2, 3 and 7.
